# EUROPEAN PATENT SPECIFICATION

(11) **EP 2 107 281 B1**
(45) Date of publication and mention of the grant of the patent: **25.04.2012**
(21) Application number: 09009410.3
(22) Date of filing: 23.03.2006
(51) Int. Cl.: F16K 3/22

(54) **Valve seat**
Ventilsitz
Siège de soupape

(30) Priority: 24.03.2005 GB 0506126
(43) Date of publication of application: 07.10.2009
(62) Divisional of application: 06726505.8
(73) Proprietor: Parker Hannifin PLC, Devon, EX31 1NP (GB)
(72) Inventor: Davis, Mathew William, Barnstaple, Devon EX31 1NP (GB)
(74) Representative: Albutt, Anthony John

(56) References cited:
- FR-A- 1 096 685
- US-A- 3 761 052
- US-A1- 2003 010 953

## Description

The present invention relates to a rising plug valve and in particular to a seat for a rising plug valve.

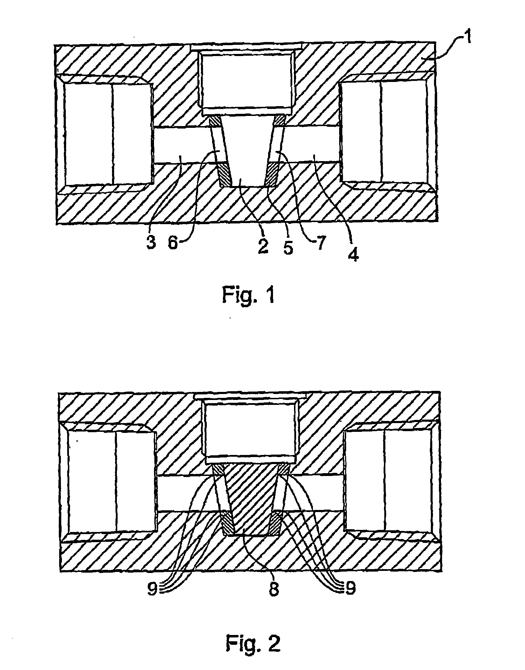

An example of a typical rising plug valve is shown in Figure 1. As can be seen, the valve comprises a body 1, usually made from metal, with a receiving hole 2 therein having a generally frusto-conical shape. A passage is provided through the receiving hole 2, the passage comprising an inlet 3 and an outlet 4. In use a generally frusto-conically shaped tip which is also made from metal is inserted into the receiving hole 2 to block the passageway 3, 4. However, since only a relatively poor seal can be obtained between two engaged metal surfaces, a frusto-conically shaped seat 5 with ports 6, 7 corresponding to the positions of the inlet 2 and outlet 3, made from a softer material is inserted into the receiving hole 2. This enhances the seal between the inlet 3 and outlet 4 provided by the fimsto-cmicauy shaped tip. As shown in Figure 2, when a generally frusto-conically shaped mating tip 8 is inserted into the receiving hole 2 with a seat 5 provided therein, the passageway 3, 4 is blocked. However, the seat 5 is rarely a perfect fit inside the receiving hole 2 and the tip 8 is rarely a perfect fit inside seat 5 because of manufacturing tolerances and so to achieve an adequate seal to prevent fluid from passing from the inlet 3 to the outlet 4, the mating tip 8 has to be forced into the seat 5 to distorted at the points 9 at which its ports 6, 7 engage the inlet 2 and outlet 3 and the mating tip 8.

However, in order to achieve a satisfactory seal at points 9, a considerable amount of force has to applied to the mating tip 8 which may be difficult to achieve. In order to achieve this the valve generally has a large handle or operation of the mating tip and the body 1 is bulky in order to provide the strength to accommodate the forces applied to it via the seat 5. Furthermore, the repeated application of high pressure levels to the seat 5 from the mating tip 8 damages the seat 5 giving it a relatively short life of typically only a few hundred uses. Regular replacement is a time consuming and expensive exercise usually requiring shutting down the supply of fluid through the rising plug valve.

United States Patent No. 3,761,052 discloses a valve comprising a body with a generally conically shaped valve chamber and a seat insert removably positioned in the chamber. French Patent No. 1096685 discloses an improved valve.

United States Patent No. 2003/0010953 discloses a gate valve for controlling fluid flow through a housing.

According to the present invention there is provided a rising plug valve comprising a seat for insertion into frusto-conical receiving hole of a rising plug valve body, the seat comprising:
a substantially frusto-conical side wall with two ports therein, one port being arranged to be aligned with an inlet of a frusto-conical receiving hole in a valve body and the other port being arranged to be aligned with an outlet of a frusto-conical receiving hole in a valve body,
wherein at least one of the portions of the side wall between the two ports has, in use, a reduced contact area with a receiving hole of a rinsing plug valve body.

The reduced contact area is a cut out, recess or flat portion in the portions of the side wall between the ports. One or more orifices, such as one or more slots, may be provided in one, or preferably both of the portions of the side wall between the ports.

Embodiments of the present invention will now be described, by way of example only, with reference to the accompanying drawings in which:
Figure 1 shows a cross-sectional view of a conventional rising plug valve;
Figure 2 shows the conventional rising plug valve of Figure 1 with a mating tip inserted therein;
Figure 3 shows a first example of a seat for a rising plug valve illustrating the present invention;
Figure 4 shows a second example of a seat for a rising plug valve illustrating the present invention and;
Figure 5 shows a rising plug valve including a seat as shown in Figure 5.

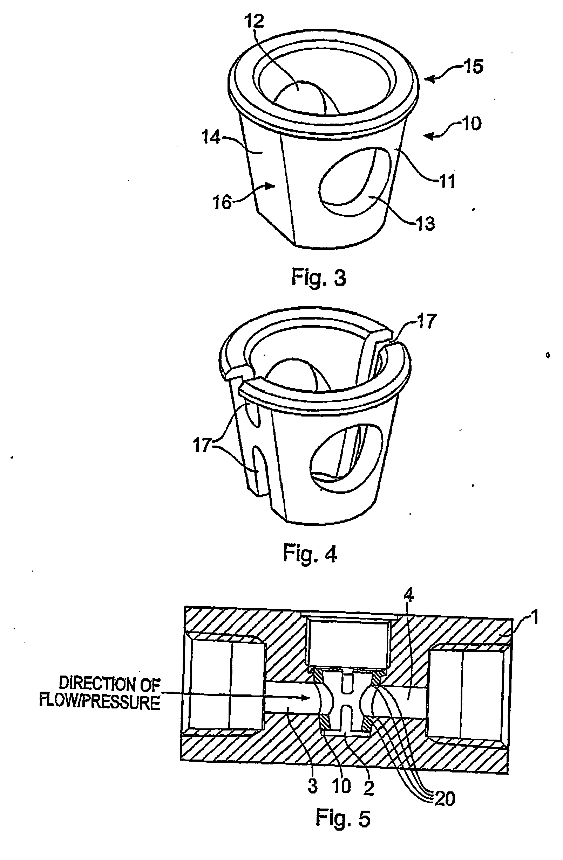

As shown in Figure 3, a rising plug valve seat 10 illustrating the present invention has a generally frusto-conical side wall 11 with two ports 12, 13 therein, one port 12 arranged to be aligned with an inlet of a receiving hole in a valve body and the other port 13 arranged to aligned with an outlet of a receiving hole in the valve body. At least one, and preferably both of the portions 14,15 of the side wall 11 between the two ports 12,13 are more flexible than the portion of the side wall 11 containing the ports 12, 13. In the example shown in Figure 3, this flexibility is provided by reducing the contact and sealing area and so the frictional binding of the portions 14, 15 of the side wall 11 between the two ports 12, 13 to the inside surface of a receiving hole in a valve body. In the example of Figure 3, the outside surfaces of the portions 14, 15 of the side wall 11 between the two ports 12, 13 are provided with cut-outs, recesses or flat portions 16 which reduce the thickness of the side wall 11 at these portions, increasing flexibility and enable the outside surfaces of these portions 14, 15 of the side wall not to contact the inside surface of a receiving hole in a valve body, in use, reducing friction. The increased flexibility and reduced contact and sealing area and so friction provided by the portions 14, 15 of the side wall 11 reduces the high levels of closing torque required to enable a mating tip to form a seal across the seat 10 when in a valve body.

Figure 4 shows the seat 10 of Figure 3 with a plurality of orifices in the form of slots 17 provided in the portions 14, 15 of the side wall 11 between the two ports 12, 13. In the example shown in Figure 4 a slot 17 is provided at each of the upper and lower ends of the portions 14, 15 of the side wall 11 between the two ports 12, 13. However, any number of one or more orifices or slots 17 may be provided in each of the portions 14, 15 of the side wall 11 between the two ports 12, 13 and the orifices or slots 17 may be in any suitable position. For example, a single slot 17 may be in substantially the centre of each of the portions 14, 15 of the side wall 11 between the two ports 12, 13.

The orifices or slots 17 give the seat 10 an enhanced level of flexibility, which results in the seat being easier to seal as the forces required to distort the shape of the seat are considerably reduced.

Due to the fact that the seat 10 no longer needs such a high level of distortion and that the distortion does not need to be symmetrical, the seat 10 now only generates a seal on one side of a receiving hole of a valve body in which it is in use, provided i.e. the opposite side to that of the applied pressure. This is shown in Figure 5 with the seal points 20 shown. As can be seen, this new rising plug valve has half the number of seal points of the previous rising plug valve and half the potential leak paths. In the example shown in Figure 5 with the seat 10 provided in a receiving hole 2 of a valve body 1 a mating tip 8 would have the ability to move or "float" in the direction of the applied pressure so that the tip and its supporting spindle are not subject to undesirable forces. This feature ensures that minimal force is exerted onto the spindle and therefore all of the closing force is exerted onto the sealing member.

The seat 10 may be made of any suitable material.

Tests with a seat 10 according to the present invention in a rising plug valve have produced excellent seals for over 2000 cycles with no loss of seal, whereas a conventional rising plug valve seat has a typical life span of a few hundred seals before the seal is compromised.

Rising plug valves with seats 10 according to the present invention require reduced operating and closing torque to engage a mating tip to produce a seal and result in a more compact rising plug valve with a reduction in unit cost The seat 10 requires reduced forces during use extending the life of the seat and reducing down time for the system in which it is provided.

Many variations may be made to the example described above whilst still falling within the scope of the invention. For example, a seat may be provided with one or more orifices such as slots in the portions of the side wall between the ports 12, 13, but without the cut-out or flat portions 16. The orifices or slots would provide sufficient flexibility for the seat to operate providing the advantage of the invention.

## Claims

1. A rising plug valve comprising a seat (10) for insertion into a frusto-conical receiving hole (2) of a rising plug valve body (1), the seat comprising:
a substantially frusto-conical side wall (11) with two ports therein (12, 13), one port (12) being arranged to be aligned with an inlet of a frusto-conical receiving hole in a valve body and the other port (13) being arranged to be aligned with an outlet of a frusto-conical receiving hole in a valve body,
wherein at least one of the portions (14, 15) of the side wall between the two ports has, in use, a reduced contact area with an inside surface of a receiving hole of a rising plug valve body.

2. A rising plug valve according to claim 1, wherein the reduced contact area with an inside surface of a receiving hole of a rising plug valve body is a cut-out, a recess or flat portion (17).

3. A rising plug valve according to claims 1 or 2, including a mating tip (8) to be received in the rising plug valve seat.

4. A rising plug valve according to claim 3, wherein the mating tip is provided on a spindle and is movable in a direction from the inlet port to the outlet port such that, in use, a seal is only provided at the outlet port to ensure that excessive force is not exerted on the spindle and the closing force is applied on the valve seat.

## Patentansprüche

1. Hubstopfenventil mit einem Sitz (10) für das Einsetzen eines Hubstopfenventilkörpers (1) in eine kegelstumpfförmige Aufnahmebohrung (2), wobei der Sitz aufweist:
eine im Wesentlichen kegelstumpfförmige Seitenwand (11) mit zwei Anschlüssen (12, 13) darin, wobei ein Anschluss (12) so angeordnet ist, dass er mit einem Einlass einer kegelstumpfförmigen Aufnahmebohrung in einem Ventilkörper ausgerichtet ist und der andere Anschluss so ausgelegt ist, dass er mit einem Auslass einer kegelstumpfförmigen Aufnahmebohrung in einem Ventilkörper ausgerichtet ist,
wobei zumindest einer der Abschnitte (14, 15) der Seitenwand zwischen den beiden Anschlüssen im Gebrauch eine verminderte Kontaktfläche mit einer Innenfläche einer Aufnahmebohrung des Hubstopfenventilkörpers hat.

2. Hubstopfenventil nach Anspruch 1, wobei die verminderte Kontaktfläche mit einer Innenfläche einer Aufnahmebohrung eines Hubstopfenventilkörpers ein Ausschnitt, ein Rücksprung oder ein abgeflachter Abschnitt (17) ist.

3. Hubstopfenventil nach Anspruch 1 oder 2, mit einer passenden Spitze (8), die in dem Sitz des Hubstopfenventils aufnehmbar ist.

4. Hubstopfenventil nach Anspruch 3, wobei die passende Spitze auf einer Spindel vorgesehen und in einer Richtung von dem Einlassanschluss zu dem Auslassanschluss bewegbar ist, sodass im Gebrauch eine Dichtung nur am Auslassanschluss gewährleistet ist, um sicherzustellen, dass keine übermäßige Kraft auf die Spindel ausgeübt wird und die Schließkraft auf den Ventilsitz ausgeübt wird.

## Revendications

1. Robinet à obturateur montant comprenant un siège (10) destiné à être inséré dans un trou de réception tronconique (2) d'un corps de robinet à obturateur montant (1), le siège comprenant:
une paroi latérale sensiblement tronconique (11) avec deux orifices (12, 13) dans celle-ci, un orifice (12) étant agencé pour être aligné avec une entrée d'un trou de réception tronconique dans un corps de robinet et l'autre orifice (13) étant agencé pour être aligné avec une sortie d'un trou de réception tronconique dans un corps de robinet,
dans lequel au moins une des parties (14, 15) de la paroi latérale entre les deux orifices possède, durant l'utilisation, une superficie de contact réduite avec une surface intérieure d'un trou de réception d'un corps de robinet à obturateur montant.

2. Robinet à obturateur montant selon la revendication 1, dans lequel la superficie de contact réduite avec une surface intérieure d'un trou de réception d'un corps de robinet à obturateur montant est une découpe, un évidement ou une partie plate (17).

3. Robinet à obturateur montant selon les revendications 1 ou 2, comprenant un embout d'accouplement (8) destiné à être reçu dans le siège de robinet à obturateur montant.

4. Robinet à obturateur montant selon la revendication 3, dans lequel l'embout d'accouplement est prévu sur une tige et est mobile dans une direction de l'orifice d'entrée à l'orifice de sortie de sorte que, durant l'utilisation, un joint d'étanchéité soit seulement prévu au niveau de l'orifice de sortie pour garantir qu'une force excessive n'est pas exercée sur la tige et la force de fermeture est appliquée sur le siège de robinet.
